# EUROPEAN PATENT SPECIFICATION

(11) **EP 3 779 289 B1**
(45) Date of publication and mention of the grant of the patent: **06.09.2023**
(21) Application number: 18912991.9
(22) Date of filing: 29.12.2018
(51) Int. Cl.: F24F 1/00, F24F 13/20, F24F 1/0007, F24F 1/0063, F24F 13/30, F24F 1/0035, F24F 1/0038, F24F 1/005, F24F 12/00

(54) **INDOOR AIR-CONDITIONER UNIT**
INNENRAUMKLIMAANLAGENEINHEIT
UNITÉ DE CONDITIONNEUR D'AIR INTÉRIEUR

(30) Priority: 30.03.2018 CN 201810276288
(43) Date of publication of application: 17.02.2021
(73) Proprietor: Gree Electric Appliances, Inc. of Zhuhai, Zhuhai, Guangdong 519070 (CN)
(72) Inventor: ZENG, Hui, Zhuhai City, Guangdong 519070 (CN); WANG, Chaoxin, Zhuhai City, Guangdong 519070 (CN); LIU, Shengbei, Zhuhai City, Guangdong 519070 (CN); JIA, Feifei, Zhuhai City, Guangdong 519070 (CN); JIN, Haiyuan, Zhuhai City, Guangdong 519070 (CN); CHEN, Shengwen, Zhuhai City, Guangdong 519070 (CN); ZENG, Qinghe, Zhuhai City, Guangdong 519070 (CN); FU, Kaikai, Zhuhai City, Guangdong 519070 (CN); LIN, Yuliang, Zhuhai City, Guangdong 519070 (CN); LIU, Heming, Zhuhai City, Guangdong 519070 (CN); YANG, Chunxia, Zhuhai City, Guangdong 519070 (CN); ZENG, Wenxuan, Zhuhai City, Guangdong 519070 (CN)
(74) Representative: Zacco GmbH
(86) International application number: PCT/CN2018/125323
(87) International publication number: WO 2019/184513

(56) References cited:
- EP-A2- 1 785 678
- CN-A- 1 590 867
- CN-A- 1 590 867
- CN-U- 201 589 390
- CN-U- 202 734 058
- CN-U- 202 734 058
- CN-U- 205 825 324
- JP-A- 2000 179 889
- TW-A- 200 619 565

## Description

### Technical Field

The present invention relates to an air conditioner indoor unit.

### Background

In recent years, with a rapid development of economy and accelerating process of urbanization, an atmospheric pollution is becoming more and more serious. The increase of the PM2.5 concentration directly results in frequent occurrence of the hazy weather, makes the fog toxic and greatly increases the harmful substance, all of which pose a serious threat to the health of human beings. Under such a circumstance, a household comfortable air conditioner known to inventors cannot satisfy the requirement of people, and the health, comfort and environmental protection have become the development objectives of the modern air conditioner.

For an air conditioner known to inventors, in order to ensure the effect, an air conditioner room must be sealed necessarily. As a result, the dust, fog, bacteria, virus and waste gas in the room are unceasingly increased, the content of oxygen is continuously reduced, and the air quality becomes increasingly poor.

Recently, while the "air-conditioner disease" draws more and more attentions, people have been asked not to stay for a long time in the air-conditioner room; and it is required to open a window to charge fresh air or exhaust the indoor air to form a negative pressure, thus supplementing fresh air to the room in a manner of leaking from a gap on a door and the window to improve the indoor environment.

At present, there are mainly two ways for exchanging new and old air on the market:
I. The indoor air is exhausted out of the room by a single fan to form a negative pressure region in the room, thus forcing outdoor fresh air to flow into the room from a gap of the room.
II. Outdoor fresh air is directly drawn to the room.

The above two ways have the problem of energy wastage due to a fact that direct drawing of the outdoor cold and hot air is bound to lead to a change of an indoor temperature, cause a large amount of energy wastage, increase the energy loss of the air conditioner and decrease the refrigerating and heating effect of the air conditioner. Particularly in winter, the entry of the outdoor cold air even leads to a condensation phenomenon of the air conditioner.

Additionally, the above two ways have the problem that polluted air enters the room without filtration; and in case of a severe hazy weather out of the room, directly drawing the outdoor air will lead to more serious pollution in the room.

An air conditioner is disclosed in Document EP1785678A2; An air conditioner is disclosed in Document TW200619565A; An indoor air conditioner with fresh air heat recovery is disclosed in Document CN202734058U; An air conditioner is disclosed in Document CN1590867A.

### Summary

The invention is defined by the claims.

Some embodiments of the present disclosure provide an air conditioner indoor unit, to solve the problem that a manner of charging fresh air to a room has large indoor energy wastage in the art known to inventors.

According to the invention it is provided an air conditioner indoor unit, which includes a main housing and a fresh air device disposed in the main housing; the fresh air device includes: a fresh air housing and a heat exchange core body; a fresh air passage and a dirty air passage are disposed in the fresh air housing; a fresh air inlet and a fresh air outlet that communicate with the fresh air passage as well as a dirty air inlet and a dirty air outlet that communicate with the dirty air passage are disposed on the fresh air housing; the heat exchange core body is disposed in the fresh air housing; the heat exchange core body communicates with the fresh air passage and the dirty air passage, such that fresh air located in the fresh air passage and dirty air located in the dirty air passage exchange heat in the heat exchange core body; the main housing includes a front panel assembly; an indoor air inlet is formed in the front panel assembly, and the indoor air inlet corresponds to the dirty air inlet, such that indoor dirty air enters the dirty air inlet by the indoor air inlet; and the front panel assembly is spliced by a plurality of plates, and the indoor air inlet is located between two adjacent plates.

According to the invention the plurality of plates includes a lateral plate assembly and a decorative plate, and the indoor air inlet is provided between the decorative plate and the lateral plate assembly.

In some embodiments, two lateral plate assemblies are provided, the decorative plate is disposed between the two lateral plate assemblies, and the indoor air inlet is respectively provided between the decorative plate and the two lateral plate assemblies.

In some embodiments, the lateral plate assembly includes an upper lateral plate and a lower lateral plate, the upper lateral plate covering an outside of a refrigerating-heating device of the air conditioner indoor unit, and the lower lateral plate covering an outside of the fresh air device; and the indoor air inlet is located between the lower lateral plate and the decorative plate.

In some embodiments, the decorative plate is of an integrally molded structure, and the decorative plate extends from a top of the air conditioner indoor unit to a bottom of the air conditioner indoor unit.

In some embodiments, the decorative plate includes a decorative plate main body and a mounting convex strip disposed an inner side of the decorative plate main body, and the decorative plate main body contacts with the lateral plate assembly by the mounting convex strip.

In some embodiments, the mounting convex strip extends along a vertical direction, an air inlet groove is formed in the mounting convex strip, and the indoor air inlet is enclosed by a surface of the lateral plate assembly and an inner wall surface of the air inlet groove.

In some embodiments, two mounting convex strips are provided, the two mounting convex strips are disposed on a top and a bottom of the decorative plate main body in one-to-one correspondence, and each of the mounting convex strips extends along a width direction of the decorative plate main body; and the indoor air inlet is enclosed by the two mounting convex strips and an inner wall surface of the decorative plate main body.

In some embodiments, the air conditioner indoor unit includes the refrigerating-heating device, and the refrigerating-heating device is located above the fresh air device; and an air-conditioner air outlet communicating with an air duct of the refrigerating-heating device is disposed in the front panel assembly, and the air-conditioner air outlet is located between the decorative plate and the lateral plate assembly.

In some embodiments, the indoor air inlet is a strip-shaped hole, and the indoor air inlet extends along an extension direction of the front panel assembly.

In some embodiments, the heat exchange core body is provided with a fresh air inlet end surface for entering fresh air, the fresh air device further includes a first filter screen, and the first filter screen is disposed on the fresh air inlet end surface, such that fresh air entering from the fresh air inlet enters the heat exchange core body after being filtered by the first filter screen.

In some embodiments, the heat exchange core body is provided with a dirty air inlet end surface for entering dirty air, the fresh air device further includes a second filter screen, and the second filter screen is disposed on the dirty air inlet end surface, such that dirty air entering from the dirty air inlet enters the heat exchange core body after being filtered by the second filter screen.

In some embodiments, the heat exchange core body is provided with a dirty air outlet end surface for flowing out dirty air, the fresh air device further includes a third filter screen, and the third filter screen is disposed on the dirty air outlet end surface, such that dirty air flowing through the heat exchange core body enters the dirty air passage after being filtered by the third filter screen.

The air conditioner indoor unit using the technical solutions of the present disclosure includes the fresh air device, and external fresh air flows into a room by the fresh air device, thus keeping the room to change air frequently; the fresh air device includes the fresh air housing and the heat exchange core body, and the fresh air passage and the dirty air passage are disposed in the fresh air housing; and the heat exchange core body is disposed in the fresh air housing, and the fresh air passage and the dirty air passage exchange heat in the heat exchange core body. Therefore, the problem that the manner of charging fresh air to the room has the large indoor energy wastage in the art known to inventors is solved. Meanwhile, the main housing includes the front panel assembly; in order to facilitate the entry of dirty air in the room to the fresh air device, the indoor air inlet is formed in the front panel assembly of the main housing; and the front panel assembly is spliced by a plurality of plates, and the indoor air inlet is located between two adjacent plates, such that dirty air can enter the heat exchange core body by the indoor air inlet for heat exchange and is finally exhausted out of the room without affecting the appearance.

### Brief Description of the Drawings

The accompanying drawings are described here to provide a further understanding of the present invention.

In the drawings:
Fig. 1 illustrates a structural schematic diagram of an air conditioner indoor unit according the invention.
Fig. 2 illustrates an enlarged diagram of an A place of an air conditioner indoor unit in Fig. 1.
Fig. 3 illustrates an internal structural schematic diagram of an air conditioner indoor unit in Fig. 1.
Fig. 4 illustrates a partially enlarged diagram of an air conditioner indoor unit in Fig. 3.
Fig. 5 illustrates a transversal sectional view of an air conditioner indoor unit in Fig. 1.
Fig. 6 illustrates a front view of an embodiment of an air conditioner indoor unit according to the present invention.
Fig. 7 illustrates a rear view of an embodiment of an air conditioner indoor unit according to the present invention.

The drawings include the following reference signs:
10, main housing, 11, front panel assembly, 111, indoor air inlet, 112, air-conditioner air outlet, 12, lateral panel assembly, 121, upper lateral panel, 122, lower lateral panel, 13, decorative plate, 132, decorative plate main body, 133, mounting convex strip, 20, fresh air device, 21, first filter screen, 22, second filter screen, 23, third filter screen, 30, fresh air housing, 31, fresh air passage, 311, fresh air inlet, 312, fresh air outlet, 32, dirty air passage, 321, dirty air inlet, 322, dirty air outlet, 40, heat exchange core body, 41, fresh air inlet end surface, 42, dirty air inlet end surface, 43, dirty air outlet end surface, and 50, refrigerating-heating device.

### Detailed Description of the Embodiments

The present invention is described below in detail with reference to the accompanying drawings.

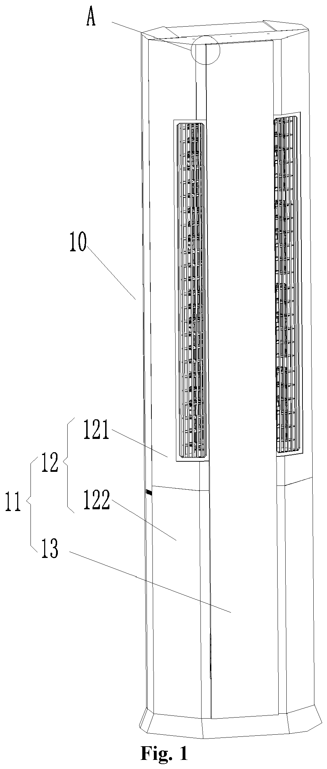

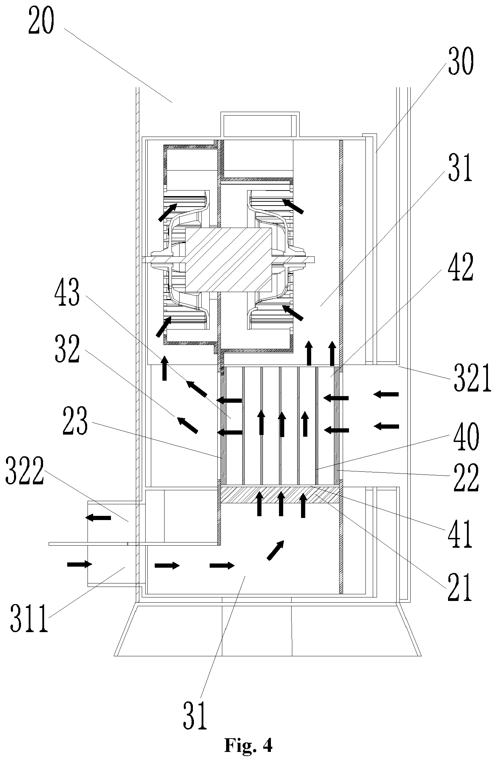

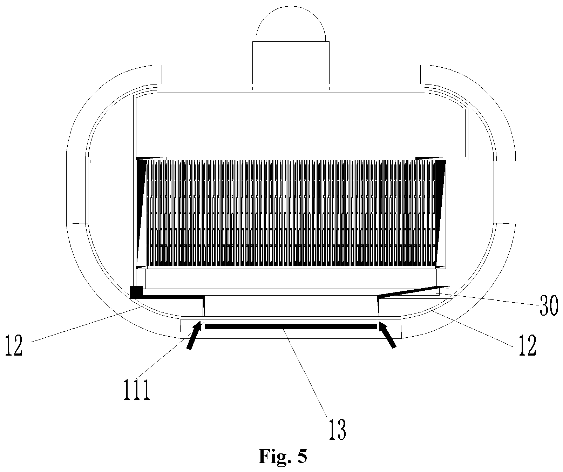

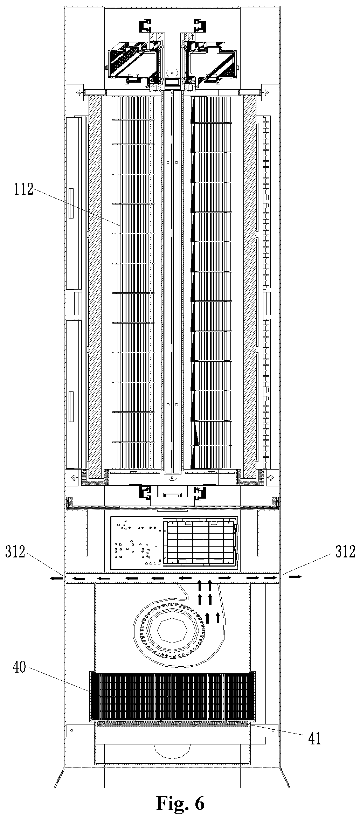

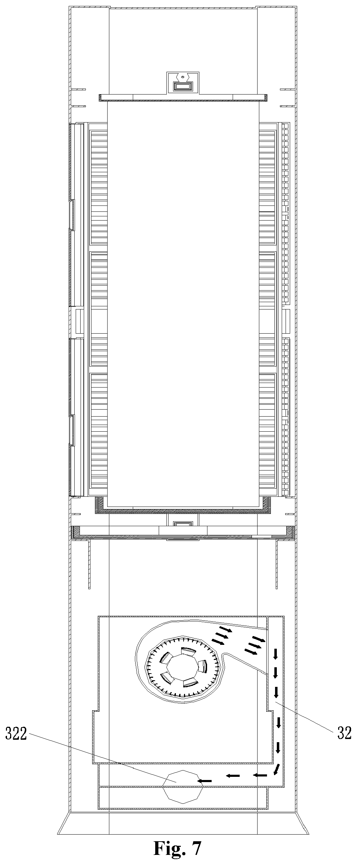

The present invention provides an air conditioner indoor unit. Referring to Fig. 1 to Fig. 7, the air conditioner indoor unit includes a main housing 10 and a fresh air device 20 disposed in the main housing 10; the fresh air device 20 includes: a fresh air housing 30 and a heat exchange core body 40; a fresh air passage 31 and a dirty air passage 32 are disposed in the fresh air housing 30; the fresh air housing 30 is provided with a fresh air inlet 311 and a fresh air outlet 312 that communicate with the fresh air passage 31; the fresh air housing 30 is provided with a dirty air inlet 321 and a dirty air outlet 322 that communicate with the dirty air passage 32; the heat exchange core body 40 is disposed in the fresh air housing 30, and the heat exchange core body 40 communicates with the fresh air passage 31 and the dirty air passage 32, such that fresh air located in the fresh air passage 31 and dirty air located in the dirty air passage 32 exchange heat in the heat exchange core body 40; the main housing 10 includes a front panel assembly 11; an indoor air inlet 111 is formed in the front panel assembly 11, and the indoor air inlet 111 corresponds to the dirty air inlet 321, such that indoor dirty air enters the dirty air inlet 321 by the indoor air inlet 111; and the front panel assembly 11 is spliced by a plurality of plates, and the indoor air inlet 111 is located between two adjacent plates.

The air conditioner indoor unit in some embodiments of the present disclosure includes the fresh air device 20, and external fresh air flows into a room by the fresh air device 20, thus keeping the room to change air frequently; the fresh air device 20 includes the fresh air housing 30 and the heat exchange core body 40, and the fresh air passage 31 and the dirty air passage 32 are disposed in the fresh air housing 30; and the heat exchange core body 40 is disposed in the fresh air housing 30, and the fresh air passage 31 and the dirty air passage 32 exchange heat in the heat exchange core body 40. Therefore, the problem that the manner of charging fresh air to the room has the large indoor energy wastage in the art known to inventors is solved. Meanwhile, the main housing 10 includes the front panel assembly 11; in order to facilitate the entry of dirty air in the room to the fresh air device 20, the indoor air inlet 111 is formed in the front panel assembly 11 of the main housing 10; and the front panel assembly 11 is spliced by a plurality of plates, and the indoor air inlet 111 is located between two adjacent plates, such that dirty air can enter the heat exchange core body 40 by the indoor air inlet 111 for heat exchange and is finally exhausted out of the room without affecting the appearance.

The plurality of plates include a lateral plate assembly 12 and a decorative plate 13, and the indoor air inlet 111 is provided between the decorative plate 13 and the lateral plate assembly 12.

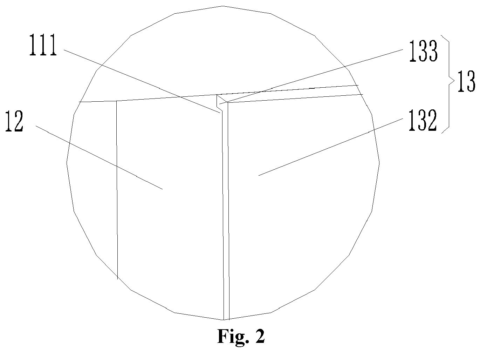

As shown in Fig. 1 and Fig. 2, the front panel assembly 11 in the implementation manner includes the lateral plate assembly 12 and the decorative plate 13; and by providing the indoor air inlet 111 between the decorative plate 13 and the lateral plate assembly 12, the front appearance of the air conditioner indoor unit is not affected, and indoor dirty air can further be exhausted by the indoor air inlet.

In some embodiments, two lateral plate assemblies 12 are provided, the decorative plate 13 is disposed between the two lateral plate assemblies 12, and the indoor air inlet 111 is respectively provided between the decorative plate 13 and the two lateral plate assemblies 12.

As shown in Fig. 1 to Fig. 4, the main housing 10 includes two lateral plate assemblies 12, the decorative plate 13 is disposed between the two lateral plate assemblies 12, and the indoor air inlet 111 is provided between the decorative plate 13 and each of the two lateral plate assemblies 12, such that indoor dirty air simultaneously enters the heat exchange core body 40 from two sides of the decorative plate 13, and the supply air rate is increased.

The lateral plate assembly 12 includes an upper lateral plate 121 and a lower lateral plate 122, the upper lateral plate 121 covers an outside of a refrigerating-heating device 50 of the air conditioner indoor unit, and the lower lateral plate 122 covers an outside of the fresh air device 20; and the indoor air inlet 111 is located between the lower lateral plate 122 and the decorative plate 13.

As shown in Fig. 1 to Fig. 4, for the convenience of manufacturing and installation, the lateral plate assembly 12 is divided into the upper lateral plate 121 and the lower lateral plate 122, the upper lateral plate 121 is configured to cover the outside of the refrigerating-heating device 50 of the air conditioner indoor unit to protect the refrigerating-heating device 50, and the lower lateral plate 122 covers the outside of the fresh air device 20 to protect the fresh air device.

The decorative plate 13 is of an integrally molded structure, and the decorative plate 13 extends from a top of the air conditioner indoor unit to a bottom of the air conditioner indoor unit.

As shown in Fig. 2, the decorative plate 13 is of the integrally molded structure, the decorative plate 13 extends from the top of the air conditioner indoor unit to the bottom of the air conditioner indoor unit, and the decorative plate covers a part of the air outlet on the upper lateral plate 121 and a part of the dirty air inlet on the lower lateral plate 122.

The decorative plate 13 includes a decorative plate main body 132 and a mounting convex strip 133 disposed an inner side of the decorative plate main body 132, and the decorative plate main body 132 contacts with the lateral plate assembly 12 by the mounting convex strip 133.

As shown in Fig. 2, the decorative plate 13 in the implementation manner includes the decorative plate main body 132 and the mounting convex strip 133, the decorative plate main body 132 contacts with the lateral plate assembly 12 by the mounting convex strip 133, and the mounting convex strip 133 is connected with the lateral plate assembly by a screw or by adhesion.

In an implementation manner of the indoor air inlet 111, the mounting convex strip 133 extends along a vertical direction, an air inlet groove is formed in the mounting convex strip 133, and the indoor air inlet 111 is enclosed by a surface of the lateral plate assembly 12 and an inner wall surface of the air inlet groove.

Specifically, in the embodiment, the mounting convex strip 133 is consistent with a length extension direction of the decorative plate main body 132 along the vertical direction, the air inlet groove is formed in the mounting convex strip 133, and the indoor air inlet 111 is enclosed by the surface of the lateral plate assembly 12 and the inner wall surface of the air inlet groove.

In another implementation manner of the indoor air inlet 111, as shown in Fig. 2, two mounting convex strips 133 are provided, the two mounting convex strips 133 are disposed on a top and a bottom of the decorative plate main body 132 in one-to-one correspondence, and the mounting convex strips 133 extend along a width direction of the decorative plate main body 132; and the indoor air inlet 111 is enclosed by the two mounting convex strips 133 and an inner wall surface of the decorative plate main body 132.

As shown in Fig. 1 and Fig. 2, two mounting convex strips 133 are provided and respectively disposed on the top and the bottom of the decorative plate main body 132. The decorative plate main body 132 is similar to the air conditioner indoor unit in dimensional proportion, i.e., a vertical length is greater than a horizontal width. In the embodiment, the mounting convex strips 133 extend along the width direction of the decorative plate main body 132. The indoor air inlet 111 is enclosed by the upper and lower mounting convex strips 133 and the inner wall surface of the decorative plate main body 132.

In some embodiments, the air conditioner indoor unit includes the refrigerating-heating device 50, and the refrigerating-heating device 50 is located above the fresh air device 20; and an air-conditioner air outlet 112 communicating with an air duct of the refrigerating-heating device 50 is formed in the front panel assembly 11, and the air-conditioner air outlet 112 is located between the decorative plate 13 and the lateral plate assembly 12.

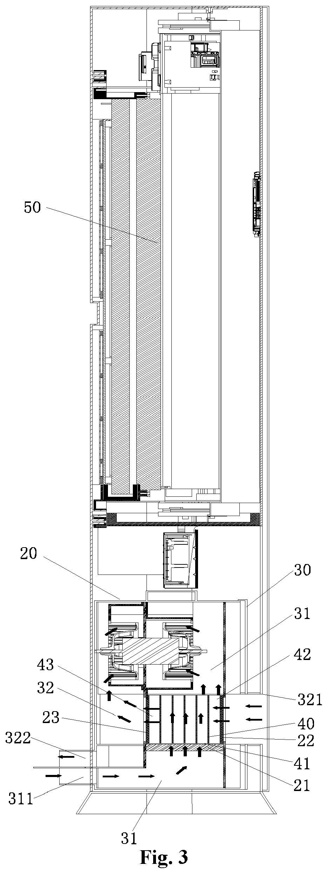

As shown in Fig. 2 and Fig. 3, the air conditioner indoor unit includes the refrigerating-heating device 50, and the fresh air device 20, and the refrigerating-heating device 50 is located above the fresh air device 20. The air-conditioner air outlet 112 communicating with the air duct of the refrigerating-heating device 50 is formed in the front panel assembly 11. By providing the air-conditioner air outlet 112 between the decorative plate 13 and the lateral plate assembly 12, air blown out from the air-conditioner air outlet is not blown forward directly but is blown out from two sides of the air conditioner indoor unit, and thus blown air is more gentle.

The indoor air inlet 111 is a strip-shaped hole, and the indoor air inlet 111 extends along an extension direction of the front panel assembly 11.

In some embodiments, the indoor air inlet 111 is set into the strip-shaped hole, and a plurality of strip-shaped holes are distributed uniformly, such that indoor dirty air enters the heat exchange core body 40 at a constant speed, and some large object is prevented from being sucked to the heat exchange core body 40 by the indoor air inlet to cause the blockage.

In some embodiments, the heat exchange core body 40 is provided with a fresh air inlet end surface 41 for entering fresh air, the fresh air device 20 further includes a first filter screen 21, and the first filter screen 21 is disposed on the fresh air inlet end surface 41, such that fresh air entering from the fresh air inlet 311 enters the heat exchange core body 40 after being filtered by the first filter screen 21.

In the embodiments, the first filter screen 21 is disposed on the fresh air inlet end surface 41 of the heat exchange core body 40, such that fresh air entering from the fresh air inlet 311 enters the heat exchange core body 40 after being filtered by the first filter screen 21, the dust and impurity in the indoor fresh air are filtered, and the entry of small animals such as a mouse and an insect is prevented.

In some embodiments, the heat exchange core body 40 is provided with a dirty air inlet end surface 42 for entering dirty air, the fresh air device 20 further includes a second filter screen 22, and the second filter screen 22 is disposed on the dirty air inlet end surface 42, such that dirty air entering from the dirty air inlet 321 enters the heat exchange core body 40 after being filtered by the second filter screen 22.

In the embodiments, the second filter screen 22 is disposed on the dirty air inlet end surface 42 of the heat exchange core body 40, such that dirty air entering from the dirty air inlet 321 enters the heat exchange core body 40 after being filtered by the second filter screen 22, and the indoor impurity or some large object is prevented from being sucked to the heat exchange core body by the dirty air inlet to cause the blockage of the heat exchange core body and reduce a service life of the heat exchange core body.

In some embodiments, the heat exchange core body 40 is provided with a dirty air outlet end surface 43, the fresh air device 20 further includes a third filter screen 23, and the third filter screen 23 is disposed on the dirty air outlet end surface 43, such that dirty air flowing through the heat exchange core body 40 enters the dirty air passage 32 after being filtered by the third filter screen 23.

In the embodiments, the third filter screen 23 is disposed on the dirty air outlet end surface 43 of the heat exchange core body 40, such that dirty air flowing through the heat exchange core body 40 enters the dirty air passage 32 after being filtered by the third filter screen 23.

The present disclosure further provides an air conditioner, including an air conditioner indoor unit and an air conditioner outdoor unit connected with a pipeline of the air conditioner indoor unit; and the air conditioner indoor unit is the above-mentioned air conditioner indoor unit.

The air conditioner in the present disclosure includes the air conditioner indoor unit and the air conditioner outdoor unit connected with the pipeline of the air conditioner indoor unit, and the air conditioner indoor unit is provided with the fresh air device, such that the exchange between indoor dirty air and outdoor fresh air is implemented; and meanwhile, the heat exchange core body is disposed in the fresh air device, so the problem that the manner of charging fresh air to the room has the large indoor energy wastage in the art known to inventors is solved.

As main constituent parts of the air conditioner of the present disclosure, the upper part is the refrigerating-heating device, and the lower part is the fresh air device. The outdoor fresh air outlets are respectively provided under two sides of the air conditioner, and the indoor dirty air inlet is provided at a gap between the decorative plate and the lateral plate assembly of the air conditioner. The outdoor fresh air inlet and the indoor dirty air outlet are disposed on a rear lower end of the air conditioner.

The process that the outdoor fresh air enters the room is as follows.

Under the driving of the rotation of a fresh air blade, fresh air passes through the fresh air inlet on the rear lower end of the air conditioner, enters the fresh air passage by the heat exchange core body, and is exhausted from lower portions on two sides of the air conditioner.

The process that indoor dirty air is exhausted out of the room is as follows.

Under the driving of the rotation of an air exhaust blade, dirty air enters by the indoor dirty air inlet formed in a cabinet internal machine, passes through the filter screen, passes through the heat exchange core body, then enters the dirty air passage formed behind the air exhaust blade, and reaches an outlet on the rear lower end of the air conditioner indoor unit, and thus indoor dirty air is exhausted.

As can be seen from the above description, the above embodiments of the present disclosure implement the following technical effects.
(1) In combination with the ordinary air conditioner and the fresh air device, fresh air is introduced to renew indoor air, and indoor dirty air is exhausted to improve the air quality; and fresh air and dirty air exchange energy by the heat exchange core body for energy recovery, thus reducing the energy wastage.
(2) The air conditioner of the present disclosure guides outdoor fresh air to the room, and an indoor exhaust port is located on left and right sides of a lower portion of the complete cabinet internal machine; an air inlet for the indoor turbid air of the air conditioner of the present disclosure is located on two sides of the decorative plate of the complete cabinet internal machine, and gaps are provided between the decorative plate and the two sides of the lateral plate assembly; and with the utilization of the gaps on the two sides for entering air, the independent opening of the fresh air inlet turns out to be unnecessary to destroy the overall appearance.

## Claims

1. An air conditioner indoor unit, comprising a main housing (10) and a fresh air device (20) disposed in the main housing (10), wherein the fresh air device (20) comprises:
a fresh air housing (30), a fresh air passage (31) and a dirty air passage (32) being disposed in the fresh air housing (30), and a fresh air inlet (311) and a fresh air outlet (312) that communicate with the fresh air passage (31) as well as a dirty air inlet (321) and a dirty air outlet (322) that communicate with the dirty air passage (32) being disposed on the fresh air housing (30); and
a heat exchange core body (40), the heat exchange core body (40) being disposed in the fresh air housing (30), and the heat exchange core body (40) communicating with the fresh air passage (31) and the dirty air passage (32), such that fresh air located in the fresh air passage (31) and dirty air located in the dirty air passage (32) exchange heat in the heat exchange core body (40); and
the main housing (10) comprises a front panel assembly (11), an indoor air inlet (111) being formed in the front panel assembly (11), and the indoor air inlet (111) corresponding to the dirty air inlet (321), such that indoor dirty air enters the dirty air inlet (321) by the indoor air inlet (111); and the front panel assembly (11) is spliced by a plurality of plates, and the indoor air inlet (111) is located between two adjacent plates;
**characterized in that** the air conditioner indoor unit is vertical, the plurality of plates comprises a lateral plate assembly (12) and a decorative plate (13), and the indoor air inlet (111) is provided between the decorative plate (13) and the lateral plate assembly (12).

2. The air conditioner indoor unit as claimed in claim 1, wherein two lateral plate assemblies (12) are provided, the decorative plate (13) is disposed between the two lateral plate assemblies (12), and the indoor air inlet (111) is respectively provided between the decorative plate (13) and the two lateral plate assemblies (12).

3. The air conditioner indoor unit as claimed in claim 1, wherein the lateral plate assembly (12) comprises an upper lateral plate (121) and a lower lateral plate (122), the upper lateral plate (121) covering an outside of a refrigerating-heating device (50) of the air conditioner indoor unit, and the lower lateral plate (122) covering an outside of the fresh air device (20); and the indoor air inlet (111) is located between the lower lateral plate (122) and the decorative plate (13).

4. The air conditioner indoor unit as claimed in claim 1, wherein the decorative plate (13) is of an integrally molded structure, and the decorative plate (13) extends from a top of the air conditioner indoor unit to a bottom of the air conditioner indoor unit.

5. The air conditioner indoor unit as claimed in claim 1, wherein the decorative plate (13) comprises a decorative plate main body (132) and a mounting convex strip (133) disposed an inner side of the decorative plate main body (132), and the decorative plate main body (132) contacts with the lateral plate assembly (12) by the mounting convex strip (133).

6. The air conditioner indoor unit as claimed in claim 5, wherein the mounting convex strip (133) extends along a vertical direction, an air inlet groove is disposed in the mounting convex strip (133), and the indoor air inlet (111) is enclosed by a surface of the lateral plate assembly (12) and an inner wall surface of the air inlet groove.

7. The air conditioner indoor unit as claimed in claim 5, wherein two mounting convex strips (133) are provided, the two mounting convex strips (133) are disposed on a top and a bottom of the decorative plate main body (132) in one-to-one correspondence, and each of the mounting convex strips (133) extends along a width direction of the decorative plate main body (132); and the indoor air inlet (111) is enclosed by the two mounting convex strips (133) and an inner wall surface of the decorative plate main body (132).

8. The air conditioner indoor unit as claimed in claim 1, wherein the air conditioner indoor unit comprises the refrigerating-heating device (50), the refrigerating-heating device (50) comprises an air duct, and the refrigerating-heating device (50) is located above the fresh air device (20); and an air-conditioner air outlet (112) communicating with the air duct is disposed in the front panel assembly (11), and the air-conditioner air outlet (112) is located between the decorative plate (13) and the lateral plate assembly (12).

9. The air conditioner indoor unit as claimed in any one of claims 1 to 8, wherein the indoor air inlet (111) is of a strip-shaped hole, and the indoor air inlet (111) extends along an extension direction of the front panel assembly (11).

10. The air conditioner indoor unit as claimed in any one of claims 1 to 8, wherein the heat exchange core body (40) is provided with a fresh air inlet end surface (41) for entering fresh air, the fresh air device (20) further comprises a first filter screen (21), and the first filter screen (21) is disposed on the fresh air inlet end surface (41), such that fresh air entering from the fresh air inlet (311) enters the heat exchange core body (40) after being filtered by the first filter screen (21).

11. The air conditioner indoor unit as claimed in any one of claims 1 to 8, wherein the heat exchange core body (40) is provided with a dirty air inlet end surface (42) for entering dirty air, the fresh air device (20) further comprises a second filter screen (22), and the second filter screen (22) is disposed on the dirty air inlet end surface (42), such that dirty air entering from the dirty air inlet (321) enters the heat exchange core body (40) after being filtered by the second filter screen (22).

12. The air conditioner indoor unit as claimed in any one of claims 1 to 8, wherein the heat exchange core body (40) is provided with a dirty air outlet end surface (43) for flowing out dirty air, the fresh air device (20) further comprises a third filter screen (23), and the third filter screen (23) is disposed on the dirty air outlet end surface (43), such that dirty air flowing through the heat exchange core body (40) enters the dirty air passage (32) after being filtered by the third filter screen (23).

## Patentansprüche

1. Innenraumklimaanlageneinheit, umfassend ein Hauptgehäuse (10) und eine Frischluftvorrichtung (20), die in dem Hauptgehäuse (10) angeordnet ist, wobei die Frischluftvorrichtung (20) Folgendes umfasst:
ein Frischluftgehäuse (30), einen Frischluftdurchlass (31) und einen Schmutzluftdurchlass (32), die in dem Frischluftgehäuse (30) angeordnet sind, und einen Frischlufteinlass (311) und einen Frischluftauslass (312), die mit dem Frischluftdurchlass (31) in Verbindung stehen, sowie einen Schmutzlufteinlass (321) und einen Schmutzluftauslass (322), die mit dem Schmutzluftdurchlass (32) in Verbindung stehen, die an dem Frischluftgehäuse (30) angeordnet sind; und
einen Wärmetauscherkernkörper (40), wobei der Wärmetauscherkernkörper (40) in dem Frischluftgehäuse (30) angeordnet ist und der Wärmetauscherkernkörper (40) mit dem Frischluftdurchlass (31) und dem Schmutzluftdurchlass (32) derart in Verbindung steht, dass in dem Frischluftdurchlass (31) befindliche Frischluft und in dem Schmutzluftdurchlass (32) befindliche Schmutzluft Wärme in dem Wärmetauscherkernkörper (40) austauschen; und
das Hauptgehäuse (10) eine Frontverkleidungsbaugruppe (11) umfasst, wobei ein Innenraumlufteinlass (111) in der Frontverkleidungsbaugruppe (11) ausgebildet ist und der Innenraumlufteinlass (111) dem Schmutzlufteinlass (321) derart entspricht, dass Innenraumschmutzluft in den Schmutzlufteinlass (321) durch den Innenraumlufteinlass (111) eintritt; und die Frontverkleidungsbaugruppe (11) durch eine Vielzahl von Platten zusammengefügt ist und sich der Innenraumlufteinlass (111) zwischen zwei benachbarten Platten befindet;
**dadurch gekennzeichnet, dass** die Innenraumklimaanlageneinheit vertikal ist, die Vielzahl von Platten eine Seitenplattenbaugruppe (12) und eine Dekorplatte (13) umfasst und der Innenraumlufteinlass (111) zwischen der Dekorplatte (13) und der Seitenplattenbaugruppe (12) bereitgestellt ist.

2. Innenraumklimaanlageneinheit nach Anspruch 1, wobei zwei Seitenplattenbaugruppen (12) bereitgestellt sind, die Dekorplatte (13) zwischen den zwei Seitenplattenbaugruppen (12) angeordnet ist und der Innenraumlufteinlass (111) jeweils zwischen der Dekorplatte (13) und den zwei Seitenplattenbaugruppen (12) bereitgestellt ist.

3. Innenraumklimaanlageneinheit nach Anspruch 1, wobei die Seitenplattenbaugruppe (12) eine obere Seitenplatte (121) und eine untere Seitenplatte (122) umfasst, wobei die obere Seitenplatte (121) eine Außenseite einer Kühl-/Heizvorrichtung (50) der Innenraumklimaanlageneinheit abdeckt und die untere Seitenplatte (122) eine Außenseite der Frischluftvorrichtung (20) abdeckt; und sich der Innenraumlufteinlass (111) zwischen der unteren Seitenplatte (122) und der Dekorplatte (13) befindet.

4. Innenraumklimaanlageneinheit nach Anspruch 1, wobei die Dekorplatte (13) eine einstückig geformte Struktur aufweist und sich die Dekorplatte (13) von einer Oberseite der Innenraumklimaanlageneinheit zu einem Boden der Innenraumklimaanlageneinheit erstreckt.

5. Innenraumklimaanlageneinheit nach Anspruch 1, wobei die Dekorplatte (13) einen Dekorplattenhauptkörper (132) und einen konvexen Montagestreifen (133), der auf einer Innenseite des Dekorplattenhauptkörpers (132) angeordnet ist, umfasst und der Dekorplattenhauptkörper (132) mit der Seitenplattenbaugruppe (12) durch den konvexen Montagestreifen (133) in Kontakt steht.

6. Innenraumklimaanlageneinheit nach Anspruch 5, wobei sich der konvexe Montagestreifen (133) entlang einer vertikalen Richtung erstreckt, eine Lufteinlassnut in dem konvexen Montagestreifen (133) angeordnet ist und der Innenraumlufteinlass (111) durch eine Fläche der Seitenplattenbaugruppe (12) und eine Innenwandfläche der Lufteinlassnut umschlossen ist.

7. Innenraumklimaanlageneinheit nach Anspruch 5, wobei zwei konvexe Montagestreifen (133) bereitgestellt sind, wobei die zwei konvexen Montagestreifen (133) an einer Oberseite und einem Boden des Dekorplattenhauptkörpers (132) in einer Eins-zu-eins-Entsprechung angeordnet sind und sich jeder der konvexen Montagestreifen (133) entlang einer Breitenrichtung des Dekorplattenhauptkörpers (132) erstreckt; und der Innenraumlufteinlass (111) durch die zwei konvexen Montagestreifen (133) und eine Innenwandfläche des Dekorplattenhauptkörpers (132) umschlossen ist.

8. Innenraumklimaanlageneinheit nach Anspruch 1, wobei die Innenraumklimaanlageneinheit die Kühl-/Heizvorrichtung (50) umfasst, die Kühl-/Heizvorrichtung (50) einen Luftkanal umfasst und sich die Kühl-/Heizvorrichtung (50) über der Frischluftvorrichtung (20) befindet; und ein Klimaanlagenluftauslass (112), der mit dem Luftkanal in Verbindung steht, in der Frontverkleidungsbaugruppe (11) angeordnet ist und sich der Klimaanlagenluftauslass (112) zwischen der Dekorplatte (13) und der Seitenplattenbaugruppe (12) befindet.

9. Innenraumklimaanlageneinheit nach einem der Ansprüche 1 bis 8, wobei der Innenraumlufteinlass (111) aus einem streifenförmigen Loch besteht und sich der Innenraumlufteinlass (111) entlang einer Erstreckungsrichtung der Frontverkleidungsbaugruppe (11) erstreckt.

10. Innenraumklimaanlageneinheit nach einem der Ansprüche 1 bis 8, wobei der Wärmetauscherkernkörper (40) mit einer Frischlufteinlassendfläche (41) zum Eintreten von Frischluft versehen ist, wobei die Frischluftvorrichtung (20) ferner eine erste Filterplatte (21) umfasst und die erste Filterplatte (21) an der Frischlufteinlassendfläche (41) derart angeordnet ist, dass von dem Frischlufteinlass (311) eintretende Frischluft in den Wärmetauscherkernkörper (40) eintritt, nachdem sie durch die erste Filterplatte (21) gefiltert wurde.

11. Innenraumklimaanlageneinheit nach einem der Ansprüche 1 bis 8, wobei der Wärmetauscherkernkörper (40) mit einer Schmutzlufteinlassendfläche (42) zum Eintreten von Schmutzluft versehen ist, wobei die Frischluftvorrichtung (20) ferner eine zweite Filterplatte (22) umfasst und die zweite Filterplatte (22) an der Schmutzlufteinlassendfläche (42) derart angeordnet ist, dass von dem Schmutzlufteinlass (321) eintretende Schmutzluft in den Wärmetauscherkernkörper (40) eintritt, nachdem sie durch die zweite Filterplatte (22) gefiltert wurde.

12. Innenraumklimaanlageneinheit nach einem der Ansprüche 1 bis 8, wobei der Wärmetauscherkernkörper (40) mit einer Schmutzluftauslassendfläche (43) zum Abführen von Schmutzluft versehen ist, wobei die Frischluftvorrichtung (20) ferner eine dritte Filterplatte (23) umfasst und die dritte Filterplatte (23) an der Schmutzluftauslassendfläche (43) derart angeordnet ist, dass durch den Wärmetauscherkernkörper (40) strömende Schmutzluft in den Schmutzluftdurchlass (32) eintritt, nachdem sie durch die dritte Filterplatte (23) gefiltert wurde.

## Revendications

1. Unité de conditionneur d'air intérieur, comprenant un boîtier principal (10) et un dispositif d'air frais (20) disposé dans le boîtier principal (10), dans laquelle le dispositif d'air frais (20) comprend :
un boîtier d'air frais (30), un passage d'air frais (31) et un passage d'air impur (32) étant disposés dans le boîtier d'air frais (30), et une entrée d'air frais (311) et une sortie d'air frais (312) qui communiquent avec le passage d'air frais (31) ainsi qu'une entrée d'air impur (321) et une sortie d'air impur (322) qui communiquent avec le passage d'air impur (32) étant disposées sur le boîtier d'air frais (30) ; et
un corps principal d'échange de chaleur (40), le corps principal d'échange de chaleur (40) étant disposé dans le boîtier d'air frais (30), et le corps principal d'échange de chaleur (40) communiquant avec le passage d'air frais (31) et le passage d'air impur (32), de sorte que l'air frais situé dans le passage d'air frais (31) et l'air impur situé dans le passage d'air impur (32) échangent de la chaleur dans le corps principal d'échange de chaleur (40) ; et
le boîtier principal (10) comprend un ensemble de panneaux avant (11), une entrée d'air intérieur (111) étant formée dans l'ensemble de panneaux avant (11), et l'entrée d'air intérieur (111) correspondant à l'entrée d'air impur (321), de sorte que l'air impur intérieur pénètre dans l'entrée d'air impur (321) par l'entrée d'air intérieur (111) ; et l'ensemble de panneaux avant (11) est relié par une pluralité de plaques, et l'entrée d'air intérieur (111) est située entre deux plaques adjacentes ;
**caractérisée en ce que** l'unité de conditionneur d'air intérieur est verticale, la pluralité de plaques comprend un ensemble de plaques latérales (12) et une plaque décorative (13), et l'entrée d'air intérieur (111) est prévue entre la plaque décorative (13) et l'ensemble de plaques latérales (12).

2. Unité de conditionneur d'air intérieur selon la revendication 1, dans laquelle deux ensembles de plaques latérales (12) sont prévus, la plaque décorative (13) est disposée entre les deux ensembles de plaques latérales (12) et l'entrée d'air intérieur (111) est respectivement prévue entre la plaque décorative (13) et les deux ensembles de plaques latérales (12).

3. Unité de conditionneur d'air intérieur selon la revendication 1, dans laquelle l'ensemble de plaques latérales (12) comprend une plaque latérale supérieure (121) et une plaque latérale inférieure (122), la plaque latérale supérieure (121) recouvrant un extérieur d'un dispositif de réfrigération-chauffage (50) de l'unité de conditionneur d'air intérieur, et la plaque latérale inférieure (122) recouvrant un extérieur du dispositif d'air frais (20) ; et l'entrée d'air intérieur (111) est située entre la plaque latérale inférieure (122) et la plaque décorative (13).

4. Unité de conditionneur d'air intérieur selon la revendication 1, dans laquelle la plaque décorative (13) est d'une structure intégralement moulée, et la plaque décorative (13) s'étend d'un sommet de l'unité de conditionneur d'air intérieur à un fond de l'unité de conditionneur d'air intérieur.

5. Unité de conditionneur d'air intérieur selon la revendication 1, dans laquelle la plaque décorative (13) comprend un corps principal de plaque décorative (132) et une bande convexe de montage (133) disposée sur un côté intérieur du corps principal de plaque décorative (132), et le corps principal de plaque décorative (132) entre en contact avec l'ensemble de plaques latérales (12) par la bande convexe de montage (133).

6. Unité de conditionneur d'air intérieur selon la revendication 5, dans laquelle la bande convexe de montage (133) s'étend le long d'une direction verticale, une rainure d'entrée d'air est disposée dans la bande convexe de montage (133) et l'entrée d'air intérieur (111) est entourée par une surface de l'ensemble de plaques latérales (12) et une surface de paroi intérieure de la rainure d'entrée d'air.

7. Unité de conditionneur d'air intérieur selon la revendication 5, dans laquelle deux bandes convexes de montage (133) sont prévues, les deux bandes convexes de montage (133) sont disposées sur un sommet et un fond du corps principal de plaque décorative (132) en correspondance biunivoque, et chacune des bandes convexes de montage (133) s'étend le long d'une direction de largeur du corps principal de plaque décorative (132) ; et l'entrée d'air intérieur (111) est entourée par les deux bandes convexes de montage (133) et une surface de paroi interne du corps principal de plaque décorative (132) .

8. Unité de conditionneur d'air intérieur selon la revendication 1, dans laquelle l'unité de conditionneur d'air intérieur comprend le dispositif de réfrigération-chauffage (50), le dispositif de réfrigération-chauffage (50) comprend un conduit d'air, et le dispositif de réfrigération-chauffage (50) est situé au-dessus du dispositif d'air frais (20) ; et une sortie d'air de climatisation (112) communiquant avec le conduit d'air est disposée dans l'ensemble de panneaux avant (11), et la sortie d'air de climatisation (112) est située entre la plaque décorative (13) et l'ensemble de plaques latérales (12).

9. Unité de conditionneur d'air intérieur selon l'une quelconque des revendications 1 à 8, dans laquelle l'entrée d'air intérieur (111) est un trou en forme de bande, et l'entrée d'air intérieur (111) s'étend le long d'une direction d'extension de l'ensemble de panneaux avant (11).

10. Unité de conditionneur d'air intérieur selon l'une quelconque des revendications 1 à 8, dans laquelle le corps principal d'échange de chaleur (40) est pourvu d'une surface d'extrémité d'entrée d'air frais (41) pour entrer de l'air frais, le dispositif d'air frais (20) comprend en outre un premier tamis filtrant (21), et le premier tamis filtrant (21) est disposé sur la surface d'extrémité d'entrée d'air frais (41), de sorte que l'air frais entrant depuis l'entrée d'air frais (311) pénètre dans le corps principal d'échange de chaleur (40) après avoir été filtré par le premier tamis filtrant (21).

11. Unité de conditionneur d'air intérieur selon l'une quelconque des revendications 1 à 8, dans laquelle le corps principal d'échange de chaleur (40) est pourvu d'une surface d'extrémité d'entrée d'air impur (42) pour entrer de l'air impur, le dispositif d'air frais (20) comprend en outre un deuxième tamis filtrant (22), et le deuxième tamis filtrant (22) est disposé sur la surface d'extrémité d'entrée d'air impur (42), de sorte que l'air impur entrant depuis l'entrée d'air impur (321) entre dans le corps principal d'échange de chaleur (40) après avoir été filtré par le deuxième tamis filtrant (22).

12. Unité de conditionneur d'air intérieur selon l'une quelconque des revendications 1 à 8, dans laquelle le corps principal d'échange de chaleur (40) est pourvu d'une surface d'extrémité de sortie d'air impur (43) pour évacuer l'air impur, le dispositif d'air frais (20) comprend en outre un troisième tamis filtrant (23), et le troisième tamis filtrant (23) est disposé sur la surface d'extrémité de sortie d'air impur (43), de sorte que l'air impur circulant à travers le corps principal d'échange de chaleur (40) entre dans le passage d'air impur (32) après avoir été filtré par le troisième tamis filtrant (23) .
